(19) Europäisches Patentamt
European Patent Office
Office européen des brevets

(11) **EP 4 340 396 A1**

(12) **EUROPEAN PATENT APPLICATION**

(43) Date of publication:
**20.03.2024 Bulletin 2024/12**

(21) Application number: **23192966.2**

(22) Date of filing: **23.08.2023**

(51) International Patent Classification (IPC):
***H04S 7/00*** *(2006.01)*

(52) Cooperative Patent Classification (CPC):
**H04S 7/30;** H04S 2400/05; H04S 2400/09;
H04S 2400/13

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 GB 202213452**

(71) Applicant: **Nokia Technologies Oy
02610 Espoo (FI)**

(72) Inventors:
• **VILKAMO, Juha Tapio
  00120 Helsinki (FI)**
• **LAITINEN, Mikko-Ville
  02130 Espoo (FI)**
• **VESA, Sampo
  00510 Helsinki (FI)**

(74) Representative: **Nokia EPO representatives
Nokia Technologies Oy
Karakaari 7
02610 Espoo (FI)**

(54) **APPARATUS, METHODS AND COMPUTER PROGRAMS FOR SPATIAL PROCESSING AUDIO
SCENES**

(57)    Examples of the disclosure relate to apparatus, methods and computer programs for spatial processing audio scenes with improved intelligibility for speech or other key sounds. In examples of the disclosure at least one audio signal comprising two or more channels is obtained. The audio signal is processed with program code to identify at least a first portion of the audio signal wherein the first portion predominantly comprises audio of interest. The first portion is processed using a first process. The second portion is processed using a second process comprising spatial audio processing. The first process comprises no spatial audio processing or a low level of spatial audio processing compared to the second process and the second portion predominantly comprises a remainder. The processed first portion and second portion can be played back using two or more loudspeakers.

EP 4 340 396 A1

FIG. 4

**Description**

TECHNOLOGICAL FIELD

Examples of the disclosure relate to apparatus, methods and computer programs for spatial processing audio scenes. Some relate to apparatus, methods and computer programs for spatial processing audio scenes with improved intelligibility for speech or other key sounds.

BACKGROUND

Stereo widening or other similar spatial processes can be used by sound reproduction devices to increase the perceived width of an audio scene. However, the widening or other spatial processes can cause distortions which can decrease the intelligibility of speech or other key sounds.

BRIEF SUMMARY

According to various, but not necessarily all, examples of the disclosure there may be provided an apparatus comprising means for:

obtaining at least one audio signal comprising two or more channels;
processing the at least one audio signal with program code to identify at least a first portion of the at least one audio signal wherein the first portion predominantly comprises audio of interest;
processing the first portion using a first process;
processing a second portion using a second process comprising spatial audio processing wherein the first process comprises no spatial audio processing or a low level of spatial audio processing compared to the second process and the second portion predominantly comprises a remainder; and
enabling the processed first portion and second portion to played back using two or more loudspeakers.

The second process may comprise a second stereo widening process.
The first process may enable the first portion to be provided in a central position in a rendered sound scene.
The second process may retain spatial audio effects within the rendered sound scene.
The means may be for applying a first equalization process to the first portion and applying a second equalization process to the second portion.
The first equalization process may comprise larger gains than the second equalization process.
The program code may be used to identify the first portion of the audio signal comprises a trained machine learning model.
The trained machine learning model may be used to separate, at least partially, a portion of the audio signals comprising audio of interest from a remainder of the audio signals.
The trained machine learning model may be configured to provide one or more sets of processing coefficients that enables the first portion and the second portion to be obtained.
The second process may comprise a cross-talk cancellation based stereo widening processing.
The program code may be configured to identify at least a first portion and two or more second portions.
The two or more second portions may be processed using different spatial audio processes.
The spatial audio processes may comprise any one or more of; stereo widening, binauralization, upmixing stereo signals, sound bar surround reproduction, cross-talk canceled stereo playback of multi-channel sound.
The audio of interest may comprise at least one of: speech, human vocal sounds.
The remainder may comprise audio that is not the audio of interest.
The remainder of the audio signal may comprise ambient sounds.
According to various, but not necessarily all, examples of the disclosure there may be provided an electronic device comprising an apparatus as described herein wherein the electronic device is at least one of: a telephone, a camera, a computing device, a teleconferencing apparatus.
According to various, but not necessarily all, examples of the disclosure there may be provided a method comprising:

obtaining at least one audio signal comprising two or more channels;
processing the at least one audio signal with program code to identify at least a first portion of the at least one audio signal wherein the first portion predominantly comprises audio of interest;
processing the first portion using a first process;

processing a second portion using a second process comprising spatial audio processing wherein the first process comprises no spatial audio processing or a low level of spatial audio processing compared to the second process and the second portion predominantly comprises a remainder; and

enabling the processed first portion and second portion to played back using two or more loudspeakers.

According to various, but not necessarily all, examples of the disclosure there is provided a computer program comprising instruction which, when executed by an apparatus, cause the apparatus to perform at least:

obtaining at least one audio signal comprising two or more channels;

processing the at least one audio signal with program code to identify at least a first portion of the at least one audio signal wherein the first portion predominantly comprises audio of interest;

processing the first portion using a first process;

processing a second portion using a second process comprising spatial audio processing wherein the first process comprises no spatial audio processing or a low level of spatial audio processing compared to the second process and the second portion predominantly comprises a remainder; and

enabling the processed first portion and second portion to played back using two or more loudspeakers.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example apparatus;
FIG. 2 shows an example electronic device comprising an apparatus;
FIG. 3 shows an example method;
FIG. 4 shows an example method;
FIG. 5 shows an example method;
FIG. 6 shows an example structure for a machine learning model;
FIG. 7 shows an example method;
FIG. 8 shows an example method; and
FIG. 9 shows example results.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DETAILED DESCRIPTION

Spatial processing can affect the intelligibility of speech or other audio of interest within audio signals. For instance, widening techniques, such as stereo widening, can be used by sound reproduction devices to increase the perceived width of an audio scene. However, the widening can cause distortions which can decrease the intelligibility of speech or other key sounds. Examples of the disclosure use a machine learning model, or other suitable process, to find a first portion of audio signals and a second portion. The first portion can comprise speech and/or other key sounds while the second portion can be the remainder. The first portion can be processed without spatial processing and the second portion can be processed with spatial processing. This can enable a spatial audio scene to be provided while retaining the intelligibility of speech.

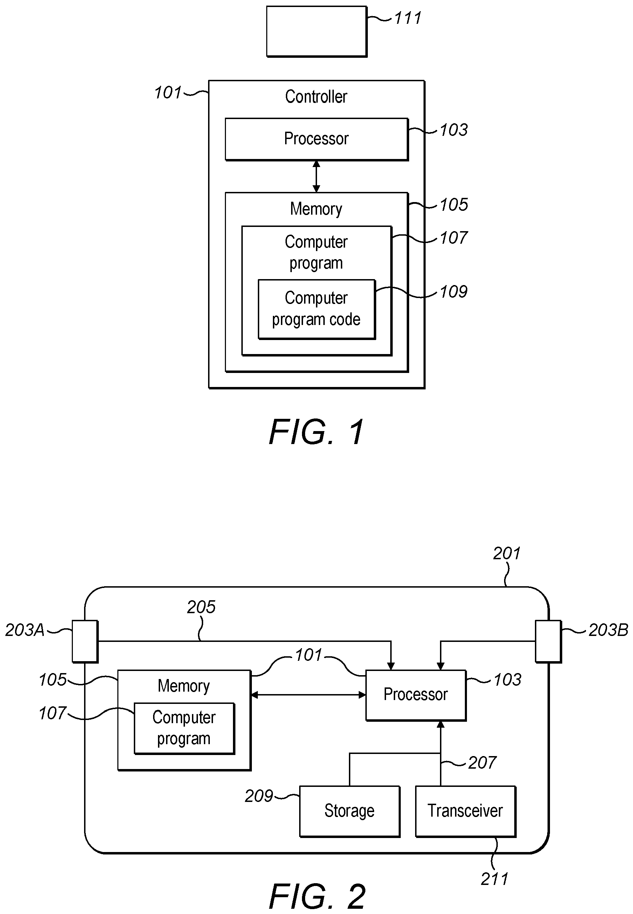

Fig. 1 schematically shows an example apparatus 101 that could be used in some examples of the disclosure. In the example of Fig. 1 the apparatus 101 comprises at least one processor 103 and at least one memory 105. It is to be appreciated that the apparatus 101 could comprise additional components that are not shown in Fig. 1.

The apparatus 101 can be configured to implement examples of the disclosure. The apparatus 101 can be configured to enable speech reproduction in audio scenes that have been spatially processed according to examples of the disclosure and/or to perform any other suitable functions.

In the example of Fig. 1 the implementation of the apparatus 101 can be implemented as processing circuitry. In some examples the apparatus 101 can be implemented in hardware alone, have certain aspects in software including firmware alone or can be a combination of hardware and software (including firmware).

As illustrated in Fig. 1 the apparatus 101 can be implemented using instructions that enable hardware functionality, for example, by using executable instructions of a computer program 107 in a general-purpose or special-purpose processor 103 that can be stored on a computer readable storage medium (disk, memory etc.) to be executed by such a processor 103.

The processor 103 is configured to read from and write to the memory 105. The processor 103 can also comprise an output interface via which data and/or commands are output by the processor 103 and an input interface via which data and/or commands are input to the processor 103.

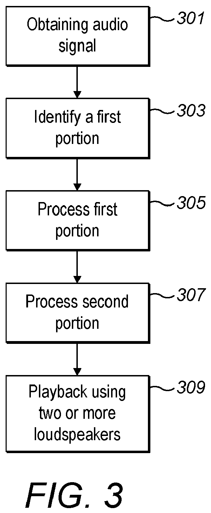

The memory 105 is configured to store a computer program 107 comprising computer program instructions (computer program code 109) that controls the operation of the apparatus 101 when loaded into the processor 103. The computer program instructions, of the computer program 107, provide the logic and routines that enables the apparatus 101 to perform the methods illustrated in Figs. 3 to 8. The processor 103 by reading the memory 105 is able to load and execute the computer program 107.

The apparatus 101 therefore comprises: at least one processor 103; and

at least one memory 105 including computer program code 109,
the at least one memory 105 storing instructions that, when executed by the at least one processor 103, cause the apparatus 101 at least to:

obtaining at least one audio signal comprising two or more channels;
processing the at least one audio signal with program code to identify at least a first portion of the at least one audio signal wherein the first portion predominantly comprises audio of interest;
processing the first portion using a first process;
processing a second portion using a second process comprising spatial audio processing wherein the first process comprises no spatial audio processing or a low level of spatial audio processing compared to the second process and the second portion predominantly comprises a remainder; and
enabling the processed first portion and second portion to played back using two or more loudspeakers.

As illustrated in Fig. 1 the computer program 107 can arrive at the apparatus 101 via any suitable delivery mechanism 111. The delivery mechanism 111 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 107. The delivery mechanism can be a signal configured to reliably transfer the computer program 107. The apparatus 101 can propagate or transmit the computer program 107 as a computer data signal. In some examples the computer program 107 can be transmitted to the apparatus 101 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 107 comprises computer program instructions for causing an apparatus 107 to perform at least the following:

obtaining at least one audio signal comprising two or more channels;
processing the at least one audio signal with program code to identify at least a first portion of the at least one audio signal wherein the first portion predominantly comprises audio of interest;
processing the first portion using a first process;
processing a second portion using a second process comprising spatial audio processing wherein the first process comprises no spatial audio processing or a low level of spatial audio processing compared to the second process and the second portion predominantly comprises a remainder; and
enabling the processed first portion and second portion to played back using two or more loudspeakers.

The computer program instructions can be comprised in a computer program 107, a non-transitory computer readable medium, a computer program product, a machine readable medium. In some but not necessarily all examples, the computer program instructions can be distributed over more than one computer program 107.

Although the memory 105 is illustrated as a single component/circuitry it can be implemented as one or more separate components/circuitry some or all of which can be integrated/removable and/or can provide permanent/semi-permanent/ dynamic/cached storage.

Although the processor 103 is illustrated as a single component/circuitry it can be implemented as one or more separate components/circuitry some or all of which can be integrated/removable. The processor 103 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software might not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs. 3 to 8 can represent steps in a method and/or sections of code in the computer program 107. The illustration of a particular order to the blocks does not necessarily imply that there is a required or preferred order for the blocks and the order and arrangement of the block can be varied. Furthermore, it can be possible for some blocks to be omitted.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

Fig. 2 shows an example electronic device 201 comprising an apparatus 101. The device can comprise a sound reproduction device that can be configured to playback sounds to a user. The electronic device 201 can comprise any device comprising two or more loudspeakers 203.

The apparatus 101 within the electronic device 201 can comprise a memory 105 and a processor 103 as shown in Fig. 1. Corresponding reference numerals are used for corresponding features. The electronic device 201 also comprises a plurality of loudspeakers 203, storage 209 and a transceiver 211. Only components of the electronic device 201 that are referred to below are shown in Fig. 2. The electronic device 201 can comprise additional components that are not shown.

The transceiver 211 can comprise any means that can enable data to be received by the electronic device 201. The data that is received can comprise one or more audio signals. The audio signals can be received in any suitable format. The audio signals can be received from any suitable other device.

The storage 209 can comprise any means for storing one or more audio signals. The storage 209 could comprise one or more memories or any other suitable means. The audio signals that are stored in the storage 209 can comprise audio signals that have been received by the transceiver 211 and/or audio signals that have been captured by one or more microphones of the electronic device 201.

The processor 103 is coupled to the storage 209 and/or the transceiver 211 so that one or more audio signals 207 can be provided from the transceiver 211 and/or storage 209 to the processor 103.

The processor 103 can be configured to process the audio signals 207 to perform processes according to examples of the disclosure on the audio signals 207. The processing can comprise processing the audio signals 207 so as to spatially process the audio scene while maintaining intelligibility of speech or other primary audio content. The spatial processing could comprise widening or other spatial processing.

In this description the term audio signal 207 can refer to an audio signal having only one channel or an audio signal comprising multiple channels. The term audio signal 207 is used to refer to signals in any relevant format, for examples an encoded form or a nonencoded form such as a sequence of values defining a signal waveform or spectral values.

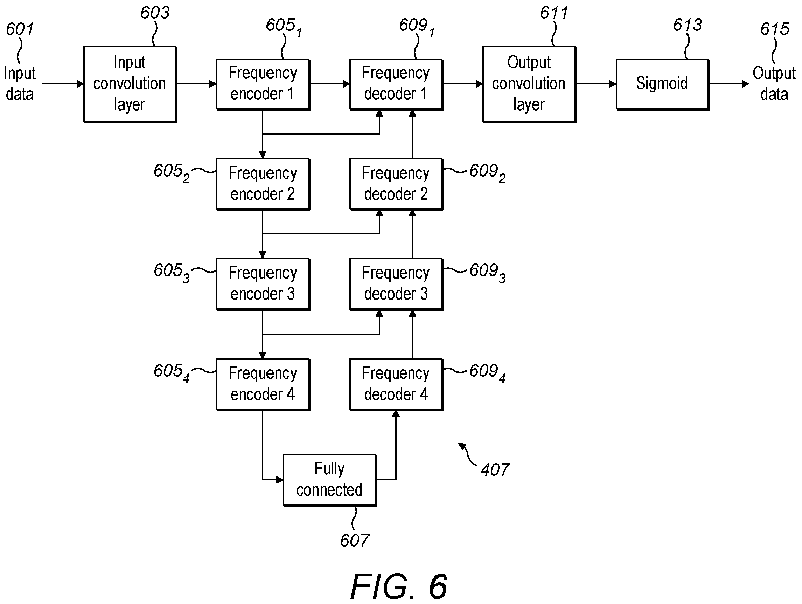

The processor 103 can be configured to use methods as shown in Figs. 3 to 8 to process the audio signals 207. In some examples the processor 103 can be configured to use a trained machine learning model to perform at least some of the processes. The trained machine learning model could be as shown in Fig. 6 or could have any other suitable structure. The trained machine learning model could be stored in the memory 105 or in any other suitable location.

The processor 103 to process the audio signals 207 and provide processed audio signals 205 as an output. The processed audio signals 205 can be provided to the two or more loudspeakers 203.

The loudspeakers 203 can comprise any means that can be configured to convert electrical signals to output sound signals. In the example of Fig. 2 the loudspeakers 203 are configured to convert the processed audio signals 205 to sound signals. The loudspeakers 203 can provide a sound signal as an output. The sound signal can be audible to a user of the electronic device 201.

In the example of Fig. 2 the electronic device 201 comprises two loudspeakers 203. A first loudspeaker 203A is provided at a first end of the electronic device 201. A second loudspeaker 203B is provided at a second end of the electronic device 201. Other numbers and arrangements of loudspeakers 203 could be used in other examples of the disclosure. For instance, in some examples the device 201 could comprise more than two loudspeakers 203. In some examples the loudspeakers 203 could be provided in a peripheral device such as headphones.

In examples of the disclosure the processed audio signals 205 are stereo or multichannel signals that have been processed such that when the sound signals are played back by the loudspeakers an audio scene is created that comprises spatialization that is perceptible to the user. The spatialization can comprise depth and width and any other suitable characteristics.

Fig. 3 shows an example method. The method could be implemented using the apparatus 101 and electronic devices 201 as shown in Figs. 1 and 2 and/or could be implemented using any other suitable means.

At block 301 the method comprises obtaining at least one audio signal 207 comprising two or more channels. The audio signals 207 could be obtained from a transceiver 211 and/or retrieved from storage 209. The audio signals can be received in any suitable format. For example, they could be encoded or non-encoded.

At block 303 the method comprises processing the at least one audio signal with program code to identify a first portion of the audio signals. In some examples both a first portion and a second portion of the audio signals 207 can be identified. In some examples, as described below, it is possible that only the first portion is identified.

The program code that is used to process the audio signals can comprise a machine learning model or any other suitable means.

The first portion predominantly comprises audio of interest. The second portion predominantly comprises the remainder. The first portion can predominantly comprise a particular type of audio such as speech. The remainder can comprise sounds that are not speech or not determined to be speech. The remainder can comprise noise, ambient sounds and/or any other suitable sounds. Any separation of the audio of interest from the remainder would not be perfect and a person skilled in the art would understand that a small amount of the audio not of interest (the remainder) would be retained in the first portion and a small amount of the audio of interest would be retained in the second portion.

The identifying and/ or separating of the audio signals 207 into the respective portions can be performed using a trained machine learning model and/or using any other suitable means. In some examples the trained machine learning model can be configured to provide one or more sets of processing coefficients that enables the first portion and the second portion to be obtained. The sets of processing coefficients can be determined in two or more frequency bands. The sets of processing coefficients can provide one or more masks that enables the first portion and the second portion to be obtained. Other means for obtaining the first portion and the second portion could be used in other examples of the disclosure.

The different portions of the audio signals 207 can be based on different types of sound sources. For instance, the first portion can be based on audio of interest. The audio of interest could be speech or other human vocal sounds or any other suitable sound sources. The human vocal sounds could be singing, laughing or other sounds that a human might make. The second portion could be based on audio other than audio of interest. The second portion could be a remainder. For instance, the second portion could be based on ambient sounds.

At block 305 the first portion is processed using a first process and at block 307 the second portion is processed using a second process. The first process comprises no spatial audio processing or a low level of spatial audio processing compared to the second process. For example, the first process can comprise no spatial processing or a negligible level of spatial processing.

In some examples the spatial processing can comprise stereo widening. In such cases the first portion is processed using a first stereo widening process and at block 307 the second portion is processed using a second stereo widening process. The first stereo widening process can comprise no stereo widening processing or a negligible level of stereo widening processing. The second stereo widening process can comprise a stereo widening that perceptibly changes the width of the audio scene. In some examples the second stereo widening process can comprise a cross-talk cancellation based stereo widening processing or any other suitable stereo widening processing.

The processing of the first portion without spatial processing, or with a low level of spatial processing can enable the first portion to be provided in a central position in a rendered sound scene. As no spatial processing, or a very low level of spatial processing, is applied to the first portion there is no distortion of the first portion and this can be retained within a central position in an audio scene represented by the audio signals 207.

The processing of the second portion with spatial processing, or with higher levels of spatial processing than those used for the first portion, can retain or improve spatial audio effects within the rendered sound scene. For example, it can retain or improve the effect of ambient sounds and/or can retain or improve the effect of some sounds appearing to arrive from a different direction to the audio of interest.

In some examples the spatial processing of the audio signals 207 can comprise applying different equalizations to the first portion and the second portion. For example, a first equalization process can be applied to the first portion and a second equalization process can be applied to the second portion. The first equalization process can comprise using larger gains than the second equalization process. The different equalization processes can increase the relative level of the first portion compared to the second portion. This can help to increase the intelligibility or prominence of the audio of interest within an audio sound scene.

At block 309 the method comprises enabling the processed first portion and second portion to played back using two or more loudspeakers 203. The enabling playback could comprise providing the processed signals to the respective loudspeakers 203.

The blocks of Fig. 3 could be performed in any suitable order. For example, the spatial processing could be applied to the second portion and the spatially processed second portion and the non-spatially processed first portion could be processed together.

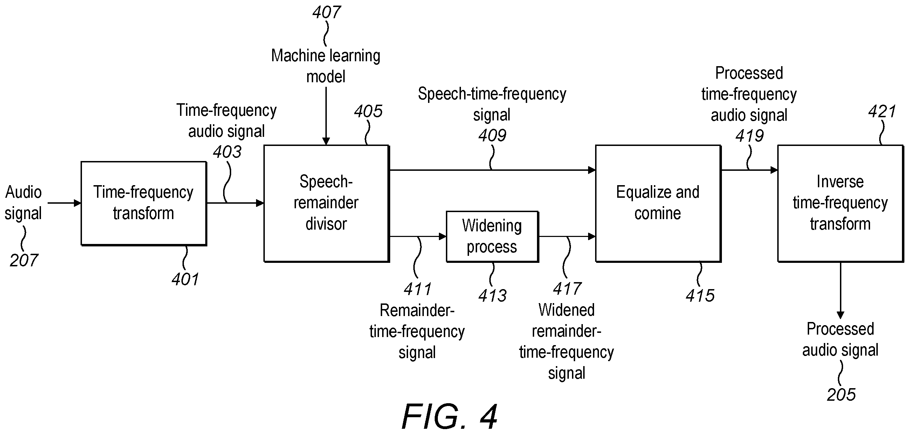

Fig. 4 shows an example method. The method could be performed by the processor 103 in the electronic device 201 as shown in Fig. 2 or by any other suitable apparatus 101. In this example the spatial processing comprises stereo widening.

The processor 103 can receive audio signals 207 as an input. The audio signals 207 can comprise a single signal with at least two channels or could be more than one signal. The audio signals 207 comprise audio signals that are received by the transceiver 111 and/or retrieved from storage 209 and/or obtained in any other way.

The audio signals 207 comprise data that represent sound. The processor 103 can receive one or more audio signals 207 as an input. An audio signal 207 can comprise one or more channels.

The audio signals 207 can be written as $s(t,i)$, where $t$ is a sample index index and $i$ is the channel index.

The audio signals 207 are provided to a time-frequency transform block 401. The time-frequency transform block 401 is configured to apply any suitable time-frequency transform to convert the audio signals 207 from the time domain. The audio signals 207 can be converted from the time domain to frequency bins.

In some examples the time-frequency transform block 401 could be configured to perform a transform comprising a Short-Time Fourier Transform (STFT). The STFT can be configured to take a frame of 1024 samples of the audio signals 207, concatenate the frame with the previous 1024 samples, apply a square-root of the 2*1024 length Hann window to the concatenated frames, and apply a fast Fourier transform (FFT) to the result. Other transforms, such as a complex modulated quadrature mirror filterbank, could be used in other examples.

The time-frequency transform block 401 provides an output comprising time-frequency audio signals 403. The time-frequency audio signals 403 can be denoted $S(b,n,i)$ where $b$ is a frequency bin index, $n$ is the time index and $i$ is the channel index. The time-frequency audio signals 403 can be denoted in a column vector form

$$s(b,n) = \begin{bmatrix} S(b,n,1) \\ S(b,n,2) \end{bmatrix}$$

The time-frequency audio signals 403 are provided to a speech-remainder divisor block 405. The speech-remainder divisor block 405 can be configured to divide the time-frequency audio signals 403 into a first portion and a second portion where the first portion comprises audio of interest and the second portion does not comprise the audio of interest. In this example the audio of interest is speech and the second portion is the remainder. Other portions could be used in other examples. For instance, in other examples the most important audio might not be speech it could be other sounds accompanying a video such as explosions or music or any other suitable sounds. The same processes used in Fig. 4 could be used for other portions of audio. For instance, if sounds other than speech are dominant in an audio scene the speech portion could be replaced by the other dominant sounds.

The speech-remainder divisor block 405 receives the time-frequency audio signals 403 and processes the time-frequency audio signals 403 to generate the speech time-frequency signal 409. The speech time-frequency signal 409 can be denoted $s_{speech}(b,n)$. The speech time-frequency signal 409 comprises the speech within the time-frequency audio signals 403.

The speech-remainder divisor block 405 also processes the time-frequency audio signals 403 to generate the remainder time-frequency signal 411. The remainder time-frequency signal 411 can be denoted $s_{remainder}(b,n)$. The remainder time-frequency signal 411 comprises the remainder within the time-frequency audio signals 403. The remainder can be the portion of the time-frequency audio signals 403 that is not speech.

As mentioned above, other portions could be used instead of speech and remainder. There would be some tolerance in what can be comprised within the respective portions of the audio signals. For example, the first portion could comprise a small amount of the remainder but would be predominantly speech while the second portion could comprise a small amount of the speech but would be predominantly the remainder.

In examples of the disclosure the speech-remainder divisor block 405 uses a machine learning model 407. The machine learning model 407 that is used can be stored in a memory 105 of the apparatus 101 and/or can be accessed from any suitable location.

The machine learning model 407 can be a pre-trained machine learning model 407. The machine learning can comprise a neural network or any other suitable type of trainable model. The term "Machine Learning Model" refers to any kind of artificial intelligence (AI), intelligent or other method that is trainable or tuneable using data. The machine learning model can comprise a computer program. The machine learning model can be trained to perform a task, such as identifying speech within audio signals, without being explicitly programmed to perform that task. The machine learning model 407 can be configured to learn from experience E with respect to some class of tasks T and performance measure P if its performance at tasks in T, as measured by P, improves with experience E. in these examples the machine learning model 407 can often learn from reference data to make estimations on future data. The machine learning model 407 can be also a trainable computer program. Other types of machine learning models 407 could be used in other examples.

It is also possible to train one machine learning model 407 with specific architecture, then derive another machine learning model 407 from that using processes such as compilation, pruning, quantization or distillation. The term "Machine Learning Model" 407 covers all these use cases and the outputs of them. The machine learning model 407 can be executed using any suitable apparatus, for example CPU, GPU, ASIC, FPGA, compute-in-memory, analog, or digital, or optical apparatus. It is also possible to execute the machine learning model 407 in apparatus that combine features from any number of these, for instance digital-optical or analog-digital hybrids. In some examples the weights and required computations in these systems can be programmed to correspond to the machine learning model 407. In some examples the apparatus 101 can be designed and manufactured so as to perform the task defined by the machine learning model 407 so that the apparatus 101 is configured to perform the task when it is manufactured without the apparatus 101 being programmable as such.

The training of the machine learning model 407 could be performed by a system that is separate to the apparatus 101. For example, the machine learning model 407 could be trained by a system or other apparatus that has a higher processing capacity than the apparatus 101 of Fig. 1. In some examples the machine learning model 407 could be trained by a system comprising one or more graphical processing units (GPUs) or any other suitable type of processor.

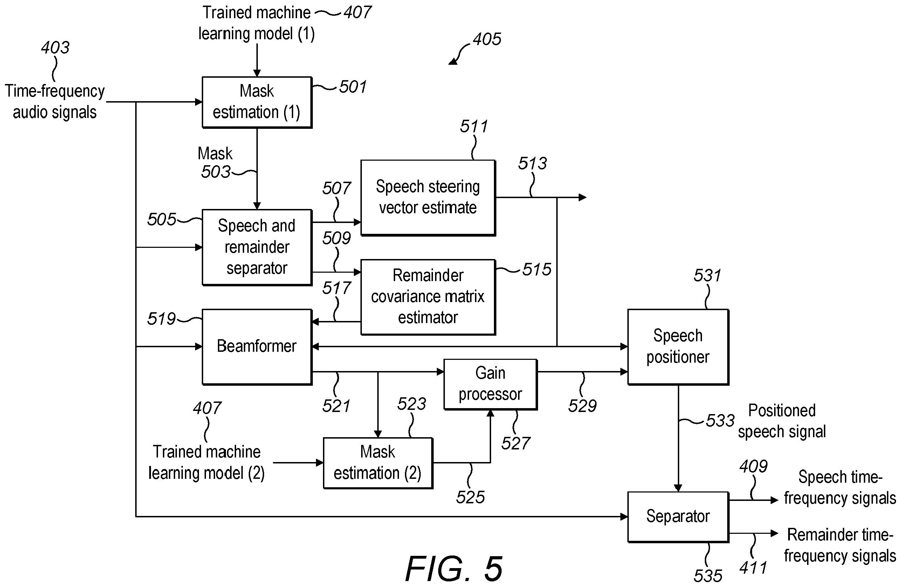

Further details of a speech-remainder divisor block 405 are shown in Fig. 5.

The speech-remainder divisor block 405 provides the speech time-frequency signal 409 and the remainder time-frequency signal 411 as outputs. The speech time-frequency signal 409 is provided to an equalize and combine block 415 and the remainder time-frequency signal 411 is provided to a widening processing block 413. This enables different processing to be performed on the different respective portions of the audio signals. That is, it enables widening to be performed on a second portion and not be performed on a first portion.

The widening processing block 413 can be configured to process an input signal to perform stereo widening on the input signal. In examples of the disclosure the widening processing block 413 is configured to perform stereo widening on a second portion of the audio signal.

In the example of Fig. 4 the widening processing block 413 receives the remainder time-frequency signal 411 as an input. The remainder time-frequency signal 411 can be denoted as $s_{remainder}(b,n)$. In the example of Fig. 4 the remainder time-frequency signal 411 comprises two channels (or two rows in a matrix). The widening processing block 413 can apply a stereo widening matrix $W(b)$ to generate the widened remainder time-frequency signal 417. The widened remainder time-frequency signal 417 can be denoted as:

$$s_{widened}(b,n) = \mathbf{W}(b)s_{remainder}(b,n)$$

The widening matrix $\mathbf{W}(b)$ can be formulated before the processing of the audio signals 207. The widening matrix $\mathbf{W}(b)$ can be a predetermined matrix. The widening matrix $\mathbf{W}(b)$ can be formulated based on dummy head recordings of a target device or any other suitable means.

The widening matrix $\mathbf{W}(b)$ can be configured so that at mid frequencies the widening matrix $\mathbf{W}(b)$ performs the widening processing. The mid frequencies can be in the range 100 and 5000 Hz. At low frequencies and high frequencies, the wavelengths can be too large or too small for robust widening. For these frequencies the widening matrix $\mathbf{W}(b)$ can be a diagonal matrix. Examples of formulating a widening matrix $\mathbf{W}(b)$ are given below.

The widening processing block 413 provides the widened remainder time-frequency signal 417 as an output. The widened remainder time-frequency signal 417 is provided to the equalize and combine block 415 so that both the widened remainder time-frequency signal 417 and the speech time-frequency signal 409 are provided to the equalize and combine block 415. Therefore, in examples of the disclosure a first portion that has not been widened and a second portion that has been widened are provided to the equalize and combine block 415.

The equalize and combine block 415 is configured to equalize and combine the respective input signals to generate the processed time-frequency audio signal 419. The processed time-frequency audio signal 419 can be generated by any suitable means such as:

$$s_{processed}(b,n) = g_{speech}(b)s_{speech}(b,n) + g_{remainder}(b)s_{widened}(b,n)$$

where $g_{speech}(b)$ comprises equalization gains for the speech portion and $g_{remainder}(b)$ comprises equalization gains for the remainder portion.

The equalization gains for the speech portion can be selected so as to equalize the device response to the listening position as much as possible without causing distortion. These equalization gains can be obtained in an offline processing stage or at any other suitable stage. The gains can be obtained by measuring the device response to a reference microphone, determining gains that flatten the response, and limiting the gains to a predetermined maximum gain value.

The equalization gains for the remainder portion can be selected so as to provide modest equalization compared to the equalization gains for the speech portion or could be selected so as to provide no equalization. The reason for using lower equalization for the remainder portion is that the speech quality is maximized, or substantially maximized, while avoiding the remainder sounds causing distortion in the playback of the audio.

In some examples the equalization gains can be adaptive. That is, they can be changed so that different gains can be used in different times and/or for different circumstances. For example, if the distortion characteristics of the electronic device 201 are known, then the equalization gains can be adaptive so as to perform maximum, or substantially maximum equalization, without causing excessive distortion.

In the above example the signals $s_{speech}(b,n)$ and $s_{remainder}(b,n)$ were separated into a first portion and a second portion and the respective portions were processed separately. In the above examples the remainder was processed with widening by $s_{widened}(b,n) = \mathbf{W}(b)s_{remainder}(b,n)$. The first portion and the second portion that had been widened were equalized differently and summed. Separating the audio signal into respective portions this way is the clearest example that illustrates the principle of the disclosure. However, a practical implementation might not need to separate the signals. In other examples it is not necessary to separate the respective portions so the processing could be performed without having the first portion and the second portion stored separately in the memory

For example, the separation into the respective portions could be performed using a separator gain $g_s(b,n)$ so that $s_{speech}(b,n) = g_s(b,n)s(b,n)$ and $s_{remainder}(b,n) = (1 - g_s(b,n))s(b,n)$. In this case the above operations could be expressed by

$$s_{processed}(b,n) = g_{speech}(b)s_{speech}(b,n) + g_{remainder}(b)s_{widened}(b,n)$$

$$= g_{speech}(b)g_s(b,n)s(b,n) + g_{remainder}(b)\mathbf{W}(b)(1 - g_s(b,n))s(b,n)$$

$$= \left[g_{speech}(b)g_s(b,n)\mathbf{I} + g_{remainder}(b)\mathbf{W}(b)(1 - g_s(b,n))\right]s(b,n)$$

$$= \mathbf{P}(b,n)s(b,n)$$

where $\mathbf{I}$ is an identity matrix, and

$$P(b,n) = g_{speech}(b)g_s(b,n)\mathbf{I} + g_{remainder}(b)\mathbf{W}(b)(1 - g_s(b,n))$$

In this case an operator matrix $P(b,n)$ can be used to apply the processing to the respective portions where only the remainder (or second portion) is processed with stereo widening. In this implementation the respective portions of the signals are never obtained at the memory 105 of the apparatus 101. Instead, the processing is applied directly on the unseparated signals $s(b,n)$. It is a matter of implementation if the respective portions are separated, or if the processing is combined as above. The result may nevertheless be similar or the same.

The equalize and combine block 415 provides the processed time-frequency audio signal 419 as an output. The processed time-frequency audio signal 419 can be denoted as $s_{processed}(b,n)$. The processed time-frequency audio signal 419 is provided to the inverse time-frequency transform block 421.

The inverse time-frequency transform block 421. Is configured to perform an inverse time-frequency transform. The inverse time-frequency transform that is performed by the inverse time-frequency transform block 421 corresponds to the transform that is performed by the time-frequency transform block 401. For instance, if the time-frequency transform block 401 is configured to perform an STFT then the inverse time-frequency transform block 421 would be configured to perform an inverse STFT. Other types of transforms could be used in other examples.

The inverse time-frequency transform block 421 provides a processed audio signal 205 as an output. The processed audio signal 205 can be provided in any suitable format. The processed audio signal 205 can be provided to loudspeakers 203 to enable the processed audio signal 205 to be played back by the loudspeakers.

Any suitable process can be used to obtain the widening matrix $\mathbf{W}(b)$ that is used by the widening processing block 413. The widening matrix $\mathbf{W}(b)$ can be obtained during an offline processing stage. The widening matrix $\mathbf{W}(b)$ can be obtained before the method of Fig. 4 is implemented.

As an example, the widening matrix $\mathbf{W}(b)$ could be obtained by measuring or simulating the impulse response of the loudspeakers 203 from the electronic device 201 to the ear microphones of a dummy head. In this measurement, the apparatus is held in front of the dummy head at a typical viewing position.

The impulse responses are converted to a frequency representation. The same frequency resolution as used in the Time-frequency transform block 401 of Fig. 4 can be used to convert the impulse responses to a frequency representation. This results in complex-valued transfer functions $h(b,j,i)$, where $j$=1,2 is an index denoting left and right ear, and $i$ = 1,2 is the loudspeaker channel index.

The transfer functions are then also obtained also for a wider positioning. A similar process can be used to obtain the transfer functions for the wider position. The loudspeakers 203 of the electronic device 201 can be placed in positions that are further to the left or right as appropriate. The corresponding transfer functions $h_{wide}(b,j,i)$ are then obtained.

As an alternative the measurement could be made by using a reference loudspeaker placed at the wider positions. This alternative could be suitable for use if the aim of the widening procedure is also to equalize the response of the electronic device 201. However, such equalization might not be always desirable, at least to a full extent, because some electronic devices 201 such as mobile phones have compromised bass levels, and excessive bass amplification is likely to cause distortion.

The transfer functions can then be denoted in a matrix form:

$$\mathbf{H}(b) = \begin{bmatrix} h(b,1,1) & h(b,1,2) \\ h(b,2,1) & h(b,2,2) \end{bmatrix}$$

$$\mathbf{H}_{wide}(b) = \begin{bmatrix} h_{wide}(b,1,1) & h_{wide}(b,1,2) \\ h_{wide}(b,2,1) & h_{wide}(b,2,2) \end{bmatrix}$$

The aim of the of the widening processing is then if a sound is first processed with $\mathbf{W}(b)$ and then reproduced at the left and right loudspeakers, their response at the ear will match the wide binaural responses of $\mathbf{H}_{wide}(b)$. This matching can be denoted as:

$$\mathbf{H}_{wide}(b) = \mathbf{H}(b)\mathbf{W}(b)$$

And therefore:

$$\mathbf{W}(b) = \mathbf{H}_{wide}(b)\mathbf{H}^{-1}(b)$$

The inverse $\mathbf{H}^{-1}(b)$ should be regularized at least at low frequencies, for example, by diagonal loading, or by applying a singular value decomposition $\mathbf{H}(b) = \mathbf{U}(b)\mathbf{S}(b)\mathbf{V}^{\mathrm{H}}(b)$, then regularizing $\mathbf{S}(b)$ so that each of its diagonal value is bottom limited to a value that is 0.1 of the maximum of the diagonal, and $\mathbf{H}^{-1}(b) = \mathbf{V}(b)\hat{\mathbf{S}}^{-1}(b)\mathbf{U}^{\mathrm{H}}(b)$, where $\hat{\mathbf{S}}(b)$ is the regularized $\mathbf{S}(b)$.

At a certain frequency, for example, 5000 Hz, the wavelength starts to be too small for effective cross-talk cancel processing. At these frequencies the widening matrix $\mathbf{W}(b)$ can be a diagonal matrix, such as an identity matrix.

Other methods for obtaining the widening matrix can be used in other examples of the disclosure.

Fig. 5 shows an example method that could be performed by a speech-remainder divisor block 405 as shown in Fig. 4. This shows an example that can be used to divide audio signals into a first portion and a second portion where the first portion comprises audio of interest and the second portion does not comprise the audio of interest. Other methods and means could be used to divide the audio signals into the respective portions in other examples of the disclosure. In the example of the disclosure the audio of interest comprises speech and the second portion comprises the remainder. Other types of audio could be comprised in the respective portions in other examples. The same or similar processes could still be used even for examples that comprise different types of audio in the respective portions. For instance, the example of Fig. 5 uses a beamforming technique to separate the audio signals into the respective portions. Simpler techniques could be used in other examples however the beamforming technique shown in Fig. 5 provides the benefit that there can be any inter-channel relation between the speech portion and the remainder portion and the technique will still function to extract the speech and remainder outputs.

The time-frequency signals 403 are provided as an input to the speech-remainder divisor block 405. The time-frequency signals 403 can be provided from a time-frequency transform block 401 as shown in Fig. 4 or from any other suitable source.

The time-frequency signals 403 are provided as an input to a first speech mask estimator 501. The first speech mask estimator 501 also receives a trained machine learning model 407 as an input. The trained machine learning model 407 can be stored in the memory 105 or can be accessed from any other suitable location.

The first speech mask estimator 501 can be configured to estimate input data for the machine learning model 407. The input data can be denoted as $I(n, k)$. The input data can be a normalized spectrogram in decibels in a logarithmic frequency scale.

To estimate the input data the energy of the audio signals is estimated by:

$$E_{dB}(n, k) = 10 \log_{10} \sum_{b=b_{low}(k)}^{b_{high}(k)} \sum_{i=1}^{N_{ch}} |S(b, n, i)|^2$$

where $b_{low}(k)$ and $b_{high}(k)$ are the indices for the lowest and highest frequency bins of frequency band $k$, and $N_{ch}$ is the number of audio channels. Any suitable scales can be used for the frequency bands such as Bark scales, ERB (equivalent rectangular bandwidth) scales or any other type of scales. In this example the scale used comprises 96 bands at a logarithmic scale.

The maximum value $E_{dB\_max}(n,k)$ can be obtained by keeping the values $E_{dB}(n,k)$ over the last 64 temporal indices (that is, for range $n$ - 63, ..., $n$), and selecting the largest of them, for each band independently. The lower limited $E'_{dB}(n,k)$ can then be formulated by:

$$E'_{dB}(n, k) = \max\left(E_{dB}(n, k), E_{dB\_max}(n, k) - 60\right)$$

Then, the mean can be formulated by:

$$E'_{dB\_mean}(n, k) = (1 - \alpha)E'_{dB}(n, k) + \alpha E'_{dB\_mean}(n - 1, k)$$

where $\alpha$ is an IIR (Infinite impulse response) averaging factor, for example 0.99, and

$$E'_{dB\_mean}(0, k) = 0.$$

Then, the variance can then be formulated by:

$$E'_{dB\_var}(n,k) = (1-\alpha)\left[E'_{dB}(n,k) - E'_{dB_{mean}}(n,k)\right]^2 + \alpha E'_{dB\_var}(n-1,k)$$

where $E'_{dB\_var}(0,k) = 0$.

The standard deviation is then:

$$E'_{dB\_std}(n,k) = \sqrt{E'_{dB\_var}(n,k)}$$

The network input data is then:

$$I(n,k) = \frac{E'_{dB}(n,k) - E'_{dB\_mean}(n,k)}{E'_{dB\_std}(n,k)}$$

The first speech mask estimator 501 is configured to use the trained machine learning model 407 to process the network input data $I(n,k)$. The trained machine learning model 407 can be trained using the process shown in Fig. 6 or any other suitable process. The trained machine learning model 407 can be trained off-line before the method of Fig. 5 is implemented.

The trained machine learning model 407 generates an output $O_1(n,k)$, based on the input data $I(n,k)$. The output $O_1(n,k)$, is a mask 503. The mask 503 is the output of the first mask estimator 501.

The mask 503 that is estimated by the first mask estimator 501 provides a filter comprising processing gains. The processing gains can be real gains or complex gains. In this example the processing gains are real gains.

The gain values of the mask 503 can relate to values in time and/or frequency. The value of the gain values within the mask 503 are dependent upon the proportion of audio of interest within the corresponding time-frequency regions of the audio signals. For example, if a time-frequency region relates only to audio of interest then the mask value for that region would ideally be 1. Conversely if a time-frequency region relates only to ambient sounds or unwanted sounds then the mask value for that region would ideally be 0. If the time-frequency region relates to a mix of both audio of interest and unwanted sounds then the mask value would ideally be an appropriate value between 0 and 1. In examples of the disclosure the audio of interest could be speech. Other types of audio could be used for the respective portions in other examples.

In the example of Fig. 5 the input for the trained machine learning model 407 comprises spectral values and the 20 latest time indices of the input data $I(n,k)$. The speech mask estimator 501 can store the historical data to enable it to be processed by the trained machine learning model 407.

The mask 503 is provided as an input to the speech and remainder separator 505. The speech and remainder separator 505 also receives the time-frequency signals 403 as an input. The speech and remainder separator 505 can be configured to separate the time-frequency signals 403 into a speech portion and a remainder portion. Other types of portions could be used in other examples.

The speech and remainder separator 505 uses the mask 503 and the time-frequency signals 403 to generate a mask processed speech time-frequency signal 507. The mask processed speech time-frequency signal 507 can be denoted $S_{speechM}(b,n,i)$ where

$$S_{speechM}(b,n,i) = S(b,n,i)O_1(n,k)$$

Where $O_1(n,k)$ denotes the mask 503 and $S(b,n,i)$ denotes the time-frequency signal 403 and where band $k$ is the band where bin $b$ resides.

The speech and remainder separator 505 also uses the mask 503 and the time-frequency signals 403 to generate a mask processed remainder time-frequency signal 509. The mask processed remainder time-frequency signal 509 can be denoted $S_{remainderM}(b,n,i)$ where:

$$S_{remainderM}(b,n,i) = S(b,n,i)(1 - O_1(n,k))$$

where band $k$ is the band where bin $b$ resides.

The speech and remainder separator 505 provides the mask processed time-frequency signals 507, 509 as outputs.

The mask processed speech time-frequency signal 507 is provided as an input to a speech steering vector estimator 511. The speech steering vector estimator 511 is configured to obtain spatial information from the mask processed speech time-frequency signal 507. In the example of Fig. 5 the speech steering vector estimator 511 uses the mask processed speech time-frequency signal 507 to estimate a steering vector of the speech sound within the time-frequency audio signals 403. The steering vector has the information of the relative phases and amplitudes of the speech sound at the channels of the time-frequency audio signals 403. Other types of spatial information could be obtained from the mask processed speech time-frequency signal 507 in other examples of the disclosure.

Any suitable process can be used to determine the steering vector. In some examples the speech steering vector estimator 511 can first formulate a covariance matrix for the speech portion of the audio signal. The covariance matrix can be denoted $C_s(n,b)$ where:

$$C_s(b,n) = (1 - \gamma_s)s_{speechM}(b,n)s_{speechM}^H(b,n) + \gamma_s C_s(b,n-1)$$

where $\gamma_s$ is a temporal smoothing coefficient. The temporal smoothing coefficient can have a value between 0 and 1, for example the temporal smoothing coefficient can have a value of 0.8 or any other suitable value. $C_s(b, 0)$ can be a matrix of zeros, $and$ $s_{speechM}(b,n)$ can be a column vector having the channels of signal $S_{speechM}(n,b,i)$ as its rows.

The steering vector estimator 511 applies an eigendecomposition to the covariance matrix $C_s(b,n)$, and obtains the eigenvector $u(b,n)$ that corresponds to the largest eigenvalue. The eigenvector is then normalized with respect to its first channel by:

$$\mathbf{v}(b,n) = \frac{\mathbf{u}(b,n)}{U(b,n,1)}$$

where $U(n,b,1)$ is the first row entry of $u(b,n)$. The vector $v(b,n)$ is then the estimated steering vector 513 of the speech signal. The steering vector $v(b,n)$ comprises the steering vector values $V(b,n,i)$ at its rows. The steering vector $v(b,n)$ can vary in time and frequency. The steering vector 513 can be denoted in the vector form $v(b,n)$ as well as the entry form $V(b,n,i)$ in the present document.

The steering vector estimator 511 provides the steering vector 513 as an output.

The remainder covariance matrix estimator 515 is configured to estimate a covariance matrix for the remainder portion of the signals. The remainder portion of the signals can comprise audio that that are not audio of interest. In this example the remainder portion of the signals can comprise audio that is not speech.

The remainder covariance matrix estimator 515 receives the mask processed remainder time-frequency signal 509 as an input. The covariance matrix can be estimated based on the mask processed remainder time-frequency signal 509. The remainder covariance matrix $C_r(n,b)$ can be given by:

$$\mathbf{C_r}(b,n) = (1 - \gamma_r)s_{remainderM}(b,n)s_{remainderM}^H(b,n) + \gamma_r \mathbf{C_r}(b,n-1)$$

where $\gamma_r$ is a temporal smoothing coefficient. The temporal smoothing coefficient can have a value between 0 and 1, for example the temporal smoothing coefficient can have a value of 0.8 or any other suitable value. $C_r(b, 0)$ can be a matrix of zeroes and $s_{remainderM}(b,n)$ can be a column vector having the channels of signal $S_{remainderM}(b,n,i)$ as its rows.

The remainder covariance matrix estimator 515 provides the remainder covariance matrix 517 as an output.

A beamformer 519 receives the time-frequency signals 403, the steering vector 513 and the remainder covariance matrix 517 as inputs. The beamformer 519 can use the inputs to perform beamforming on the time-frequency signals 403. The beamformer 519 can use any suitable process for beamforming. For instance, the beamformer 519 could use minimum variance distortionless response (MVDR) or any other suitable process.

The beamformer 519 can obtain beamforming weights $w(n,b)$ where:

$$w(b,n) = C_r^{-1}(b,n) \frac{v(b,n)}{v^H(b,n)C_r^{-1}(b,n)v(b,n)}$$

The inverse $C_r^{-1}(b,n)$ can be a regularized matrix inverse, such as one using diagonal loading. The beamformer 519 can then apply the beamform weights to the time-frequency signal 403 to provide the beam time-frequency signal 521. The beam time-frequency signal 521 is given by:

$$S_{beam}(b,n) = \mathbf{w}^H(b,n)\mathbf{s}(b,n)$$

where $\mathbf{s}(n,b)$ is a column vector having the channels of signal $S(b,n,i)$ as its rows. The beamformer 519 then provides the beam time-frequency signal 521 as an output. The beam time-frequency signal 521 can be denoted as $S_{beam}(b,n)$.

The beam time-frequency signal 521 is provided as an input to the second speech mask estimator 523. The second speech mask estimator 523 also receives a trained machine learning model 407 as an input. The trained machine learning model 407 can be stored in the memory 105 or can be accessed from any other suitable location.

In the present example, the second trained machine learning model 407 can be the same as the first trained machine learning model 407 that is provided to the first speech mask estimator 501. In other examples the second trained machine learning model 407 could be different to the first trained machine learning model 407 and/or could be trained differently to the first trained machine learning model 407.

The second speech mask estimator 523 can perform similar functions to the first speech mask estimator 501 except that the second speech mask estimator 523 receives the beam time-frequency signal 521 as an input instead of the time-frequency signals 403. The second speech mask estimator 523 input thus only has one channel.

The second mask estimator 523 provides a second mask 525 as its output. The second mask 525 can be denoted as $O_2(n,k)$.

The gain processing block 527 receives the beam time-frequency signal 521 and the second mask 525 as inputs. The gain processing block 527 processes the beam time-frequency signal 521 with the second mask 525. The gain processing block 527 can use a similar process to the speech and remainder separator 505 as described above, to process the beam time-frequency signal 521 with the second mask 525. The gain processing block 527 provides a mask-processed speech time-frequency mono signal 529. The mask-processed speech time-frequency mono signal 529 can be denoted as $S_{speech\_mono}(b,n)$ where:

$$S_{speech\_mono}(b,n) = S_{beam}(b,n)O_2(n,k)$$

where band $k$ is the one where bin $b$ resides.

The speech time-frequency mono signal 529 is provided as an input to the speech positioner 531.

The speech positioner 531 is configured to receive the speech time-frequency mono signal 529 and use the steering vectors 513 to generate a positioned speech signal 533 by:

$$S_{speech\_pos}(b,n,i) = S_{speech\_mono}(b,n)V(b,n,i)$$

The positioned speech signal 533 is provided as an output of the speech positioner 531. The positioned speech signal 533 is provided to the separator 535.

The separator 535 receives the positioned speech signal 533 and the time-frequency audio signals 403 as inputs. The separator 535 uses the positioned speech signal 533 and the time-frequency audio signals 403 to generate the remainder time-frequency signals 411. The remainder time-frequency signals 411 can be denoted as $S_{remainder}(b,n,i)$ (or $\mathbf{s}_{remainder}(b,n)$ in vector form). The remainder time-frequency signals 411 can be given by:

$$S_{remainder}(b,n,i) = S(b,n,i) - S_{speech\_pos}(b,n,i)$$

The separator 535 also generates the speech time-frequency signals 409. The speech time-frequency signals 409 can be denoted as $S_{speech}(b,n,i)$ (or $\mathbf{s}_{speech}(b,n)$ in vector form). The speech time-frequency signals 409 can be given by:

$$S_{speech}(b,n,i) = S_{speech\_pos}(b,n,i)$$

The output of the separator 535 is then the speech time-frequency signals 409 and the remainder time-frequency signals 411 which are the outputs of the speech-remainder divisor 405 as shown in Fig. 4.

Fig. 6 shows an example structure for a machine learning model 407. The machine learning model 407 can used to perform any suitable block of the methods shown in Figs. 3 to 5. For example, a machine learning model could be used to classify the types of sounds or to estimate a time-frequency mask, and/or to perform any other suitable process

In this example the machine learning model 407 comprises a neural network. Other types of machine learning model 407 could be used in other examples of the disclosure. The machine learning model 407 comprises an input convolution layer 603, a plurality of frequency encoder blocks 605, a fully connected block 607, a plurality of frequency decoder blocks 609, an output convolution layer 611 and a sigmoid block 613.

The machine learning model 407 receives input data 601 as an input. The input data 601 can comprise any suitable type of data. The input data 601 can be obtained from the audio signals 205. In some examples the input data 601 can be obtain by performing pre-processing on the audio signals 205. The pre-processing can extract relevant features from the audio signals 205. In other examples machine learning model 407 can be configured so that the input data 601 could comprise the audio signals 205 without any pre-processing

The input data 601 can be provided in a format that enables it to be processed by the machine learning model 407.

In this example the input data 601 is provided in the form: num_T $\times$ num_F $\times$ num_C where num_T is the number of temporal indices and num_F is the number of frequency bands and num_C is the number of input features.

In this example, for the number of frequency bands can be num_F = 96. In this example there is only one input feature which is the spectrogram and so the number of input features is num_C = 1. The number of temporal indices is num_T = 64. It is to be noted that this time axis is the size of the network training input sample, not the time dimension of the network.

In other embodiments there could be more than one input feature. For example, there could be one or more further input features having frequency-embedding data that enables the machine learning model 407 to learn to make differing decisions based on the frequency. Other types and numbers of feature layers could be used in other examples. For example, the number of input features could be 10, where first feature is the spectrogram data, and features 2-10 could provide time-invariant frequency embeddings.

The input data 601 therefore comprises a data array having the dimensions 64 $\times$ 96 $\times$ 1. The input data 601 can be denoted as $I(n,k)$ where $n$ is the temporal index, $k$ is the frequency band index of the network input. The unity dimension of the features is omitted in this notation.

The machine learning model 407 can be trained with a time-frequency signal sequence $S(n,b,i)$ where $b$ = 1, ..., $N_{bins}$ is the frequency bin index, and $i$ = 1, ..., $N_{ch}$ is the channel index and $n$ = 1, ..., $num\_T$. Therefore, at the training stage the signal sequences for the input data 601 have a length of num_T temporal indices. During inference the input data signal can be of an arbitrary length. During inference the machine learning model 407 can be called for each temporal index $n$ at the continuous processing. Note that the term "channel" in the field of machine learning may refer to the feature dimension of the data, however, in the foregoing it refers to the channel of the provided audio signals 207.

The following discusses frequency bins and frequency bands. A frequency bin refers to a single frequency line of the applied time-frequency transform. A frequency band refers to determined combinations of these frequency bins. In a typical configuration, the frequency bins are uniform in frequency resolution, whereas the frequency bands have a non-uniform frequency resolution, typically a logarithmic-like frequency resolution having wider frequency bandwidths at higher frequencies.

During training the first feature of the input data 601 can be obtained by obtaining the energy value in decibels in frequency bands

$$E_{dB}(k,n) = 10\,log_{10} \sum_{b=b_{low}(k)}^{b_{high}(k)} \sum_{i=1}^{N_{ch}} |S(b,n,i)|^2$$

where $b_{low}(k)$ and $b_{high}(k)$ are the indices for the lowest and highest frequency bins of frequency band $k$. $S(b,n,i)$ here refers to the training input audio data processed with STFT.

A limiter value $E_{dB\_max}(k)$ is formulated that is the largest of $E_{dB}(k,n)$ over the whole data range $n$ = 1, ...,64 for each band $k$ independently. The data can then be lower-limited by

$$E'_{dB}(k,n) = max\,(E_{dB}(k,n), E_{dB\_max}(k) - 60)$$

The data is normalized and set to the first layer of the input data 601 by

$$I(n,k) = \frac{E'_{dB}(k,n) - E'_{dB\_mean}(k)}{E'_{dB\_std}(k)}$$

where $E'_{dB\_mean}(k)$ is the mean and $E'_{dB\_std}(k)$ is the standard deviation of $E'_{dB}(k,n)$ over the data range $n$ = 1, ...,64 for each band $k$ independently.

As shown in Fig. 6 the input data 601 is provided to the first layer of the machine learning model 407. In this example the first layer of the machine learning model 407 comprises an input convolution layer 603. The input convolutional layer is configured to input an array of input data to the machine learning model 407. In other embodiments the machine learning model 407 might not have the input convolution layer 603.

In this example the input convolution layer 603 comprises 20 filters of size 1x20 without zero padding. This can be referred to as the padding set being valid. The input convolution layer 603 maps the 20 temporal indices of the input data 601 to 20 feature indices. The output of the input convolution layer 603 has a form of 45 × 96 × 20.

In this example the convolution layer 603 performs an operation that reduces the temporal axis from 64 to 45. This means that the machine learning model 407 receives data for 64 temporal indices but only provides estimates for 45 outputs. This corresponds to the inference stage situation where the machine learning model 407 is provided with data for 20 temporal indices, and provides only one temporal index of data as an output. The output would be the current temporal frame gains.

The output of the input convolution layer 603 is provided to the first frequency encoder block $605_1$.

The machine learning model 407 comprises a plurality of frequency encoder blocks 605. In the example of Fig. 6 the machine learning model 407 comprises four frequency encoder blocks 605. The machine learning model 407 can comprise different numbers of frequency encoder blocks 605 in other examples of the disclosure.

Each of the frequency encoder blocks 605 comprise a sequence comprising a plurality of different layers. In this example the frequency encoder blocks 605 comprise a batch normalization layer, a rectified linear unit (ReLU) and a convolution layer. Variations of these layers could be used in examples of the disclosure. For instance, in some examples the batch normalization layer and ReLU layers could be omitted and the frequency encoder could comprise only a convolution layer with exponential linear unit (ELU) activation.

The filters of the frequency encoder blocks 605 comprise a shape of *(1×3)* and have stride *(1,2)*. The filters therefore only operate on the frequency dimension. The filters do not operate on the temporal dimension. Having a filter of a size *(1×3)* means the convolution is performed only on the frequency dimensions. Having a stride of (1,2) means downsampling by a factor of two on the frequency dimension while the temporal dimension is not downsampled.

The frequency encoder blocks 605 operate on different numbers of output features. In the example of Fig. 6 the frequency encoder blocks 605 operate on the following number of output features:

First frequency encoder block $605_1$: 32;
Second frequency encoder block $605_2$ 64;
Third frequency encoder block $605_3$ 64;
Fourth frequency encoder block $605_4$ 128.

Each frequency encoder block 605, except for the last one provides an output to the next frequency encoder block 605 and also to a corresponding level frequency decoder block 609. The last frequency encoder block $605_4$ provides the output to the fully connected block 607. The output that is provided to the fully connected block 607 comprises a data array with dimensions *45 × 6 × 128*. As the data array has passed through the encoder blocks of the machine learning model the frequency dimension in the data array has been reduced to six.

The fully connected block 607 is configured to reshape the last two dimensions of (45 × 6 × 128) to shape (45 × 768). In this example the fully connected block 607 comprises a batch normalization layer, a rectified linear unit (ReLU) and a dense (matrix operation) layer. Variations of these layers could be used in examples of the disclosure. After the dense layer, the fully connected block 607 reshapes the dimensions from (45 × 768) back to shape (45 × 6 × 128).

The output of the recurrent fully connected block 607 comprises a data array with dimensions 45 × 6 × 128. The output of the recurrent fully connected block 607 is provided to a frequency decoder block $609_4$.

The frequency decoder blocks 609 only operate on the frequency axis. One of the frequency decoder blocks $609_4$ obtains an input from the fully connected block 607. The other frequency decoder blocks $609_1$ - $609_3$ obtain two inputs. The first input is the output of a corresponding frequency encoder block 605, - $605_3$. The second input is the output of the previous frequency decoder block 609.

The frequency decoder blocks $609_1$ - $609_3$ are configured to concatenate the two input data sets on the feature axis for processing. For example, the frequency decoder block $609_3$ receives data from frequency encoder block $605_3$. This data is provided in array having dimensions *45 × 12 × 64.* The frequency decoder block $609_3$ also receives an input from the previous frequency decoder block $609_4$. This data is provided in an array having dimensions *45 × 12 ×*

*128.* The frequency decoder block $609_3$ is configured to concatenate the two inputs to create a data array having dimensions *45 × 12 × 192.*

Each of the frequency decoder blocks 609 comprise a sequence comprising a plurality of different layers. The layers in the frequency decoder blocks 609 can comprise corresponding layers to the layers in the frequency encoder blocks 605. In this example the frequency decoder blocks 609 comprise a batch normalization layer, a rectified linear unit (ReLU) and a transposed convolution layer. Variations of these layers could be used in examples of the disclosure. For instance, in some examples the batch normalization layer and ReLU layers could be omitted and the frequency decoder could comprise only a transposed convolution layer with exponential linear unit (ELU) activation.

The filters of the frequency decoder blocks 609 comprise a shape of *(1 ×3)* and have stride *(1,2)*. The filters therefore only operate on the frequency dimension. The filters do not operate on the temporal dimension.

The frequency decoder blocks 609 operate on different numbers of output features. In the example of Fig. 6 the frequency encoder blocks 605 operate on the following number of output features:

First frequency decoder block $609_1$: 32;
Second frequency decoder block $609_2$ 64;
Third frequency decoder block $609_3$ 64;
Fourth frequency decoder block $609_4$ 128.

The output of the first frequency decoder block 609, comprises a data array having dimensions *45 × 96 × 32.*

The output of the first frequency decoder block 609, is provided as an input to the output convolution layer 611. The output convolution layer 611 can be configured to convert the dimensions of the data array into a format that is more suitable for output. In the example of Fig. 6 the output convolution layer 611 is configured to apply a *1 ×1* convolution with one filter to convert the data array having dimensions *45 × 96 × 32* to a data array having dimensions *45 × 96 × 1.*

The output of the output convolution layer 611 is provided to a sigmoid block 613. The sigmoid block 613 is configured to apply a sigmoid function to the data.

The output of the sigmoid block 613 is the output data 615 of the machine learning model 407.

Therefore, when the machine learning model 407 is being trained the machine learning model 407 receives input data in a *64 × 96 × 1* array and provides output data in a *45 × 96 × 1* array. The input data 601 comprises the spectral information. The output data 615 comprises the gains for each time and frequency within the input data 601, except for the first 19 indices since the network is designed to use 20 samples of history to predict the gains for any sample index.

During inference the machine learning model 407 receives input data in a *20 × 96 × 1* array. During inference the time dimension of the input data 601 is thus 20 (the last 20 indices of temporal history) and not 64. The model provides an output data in a *1 × 96 × 1* array, i.e., 96 data points having mask gains for 96 frequency bands.

The machine learning model 407 can be trained by using two or more data sets corresponding to different types of audio. The first data set can comprise audio of interest such as speech. The second data set can comprise other sounds such as ambient sound or other sounds that are not audio of interest. To enable training of the machine learning model 407 the different data sets are randomly mixed. The random mixing can comprise selecting items from the different sets at random and randomly temporally cropping the items. The gains for each of the selected items can be applied randomly. This can give a random signal to noise ratio for the audio of interest. The random mixing can comprise summing the signals corresponding to the audio of interest and the signals corresponding to the other sound. Mixing of the test data in this way can enable a mix signal and a corresponding clean signal representing the audio of interest to be available. The audio pre-processing can also consist of any other steps, such as variations in spectrum, pitch shifts, distortions and reverberation.

The mixed data sets can be used to formulate the spectral input of the input data 601. This is provided to the machine learning model 407 to enable the machine learning model 407 to predict output data 615. The output data 615 can be used as the gains in each frequency band that are to be used to process the mixed audio signals. The training enables the machine learning model 407 to predict useful gain values.

In some examples the mixed data sets can comprise PCM (Pulse code modulated) signals. The PCM signals can have a suitable sampling rate such as 48 kHz. The PCM signals can be converted to the time-frequency domain. The PCM signals can be converted to the time-frequency domain by using a short-time Fourier transform (STFT). The STFT can have a sine window, hop size of 1024 samples and FFT (Fast Fourier Transform) size of 2048 samples. The conversion to the time-frequency domain results in a time-frequency signal having 1025 unique frequency bins and 64 time steps when the length of the mixed data set PCM signals is (64+1)*1024 samples. The frequency bin data can then be converted to the first feature part of input data 601 for the machine learning model 407.

When the output data 615 has been obtained from the machine learning model 407 this can be used to process the time-frequency signal having 1025 unique frequency bins. The output data 615 comprises the predicted gains for the different frequency bins. The output data 615 can comprise 96 values so each *k:th* gain is used to process the frequency bins at the range from $b_{low}(k)$ to $b_{high}(k)$. This can be used to suppress sounds that are not from the audio of interest. For example, this can be used to suppress signals that are not speech.

To enable the training of the machine learning model 407 a loss function can be defined. The loss function provides a value that defines how well the machine learning model 407 is predicting the desired result. To define the loss function, a difference signal is formulated between the ground truth source of an audio of interest signal (such as a speech signal) and the gain-processed mixture. The ground truth source of an audio of interest signal can comprise a clean reference signal comprising the audio of interest. The loss function formulates the energy of the difference signal with respect to the energy of the mixture in decibels. An Adam optimizer with a learning rate of 0.001 and batch size of 120 can applied during the training.

The training of the machine learning model 407 causes the network weights within the machine learning model 407 to converge. The converged network weights can then be stored in the memory 105 of a device 201 or in any other suitable location.

In some examples a machine learning model 407 having a specific architecture can be trained and then a different machine learning model 407 having a different architecture can be derived from the trained machine learning model 407. Any suitable processes can be used to derive the different machine learning model 407. For example, processes such as compilation, pruning, quantization or distillation can be used to derive the different machine learning model 407.

The machine learning model 407 can be executed using any suitable apparatus, for example CPU (Central Processing Unit), GPU (Graphics Processing unit), ASIC (Application Specific Integrated Circuit), FPGA (Field Programmable Gate Array), compute-in-memory, analog, or digital, or optical apparatus. In some examples the machine learning model 407 can be executed in apparatus that combines features from any number of these, for instance digital-optical or analog-digital hybrids. In some examples the weights and required computations in these systems can be programmed to correspond to the machine learning model 407. In some examples an apparatus 101 can be designed and manufactured so as to perform the task defined by the machine learning model 407 so that the apparatus 101 is configured to perform the task when it is manufactured without the apparatus 101 being programmable as such.

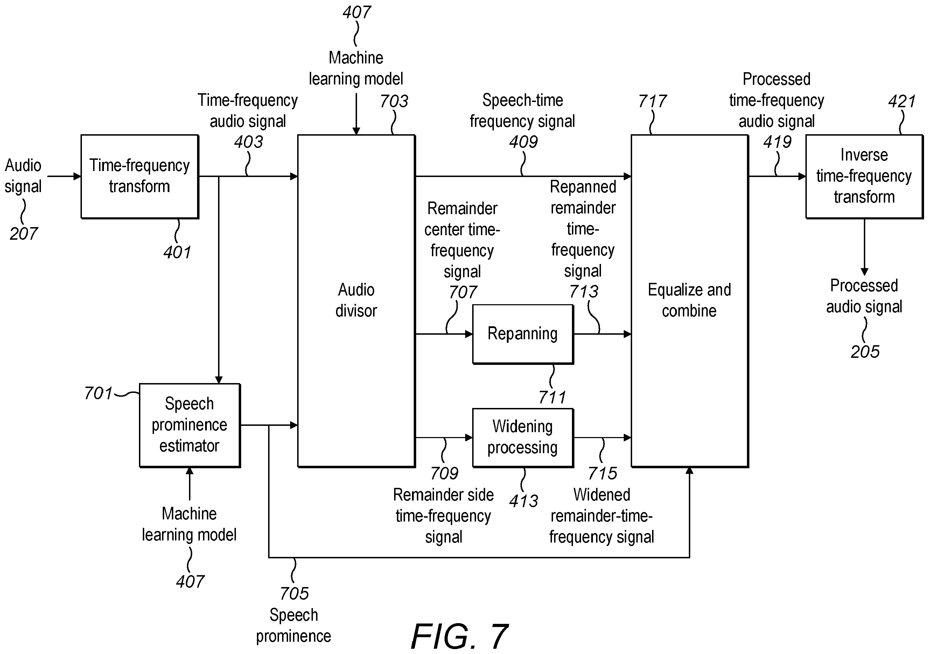

Fig. 7 shows another example method. This method could be used as an alternative to the method of Fig. 4, corresponding reference numerals are used for corresponding features. The method could be implemented using the apparatus 101 and electronic devices 201 as shown in Figs. 1 and 2 and/or could be implemented using any other suitable means.

The example method of Fig. 7 can be used where the audio of the interest is not always a prominent sound in an audio scene. For instance, the audio of interest could be speech but there could be some time intervals during which there is no speech. That is there could be pauses in dialogue. For example, when stereo widening a movie sound track, there could sometimes be sequences with speech and sometimes sequences without speech. The method of Fig. 7 is configured so that for time periods where speech is a prominent sound the widening processing is implemented to separate speech and for time periods where a different type of audio content is dominant different type of widening processing can be used.

In the example of Fig. 7 the processor 103 can receive audio signals 207 as an input. The audio signals 207 comprise audio signals that are received by the transceiver 111 and/or retrieved from storage 209 and/or obtained in any other way.

The audio signals 207 can be written as $s(t,i)$, where $t$ is a sample index index and $i$ is the channel index.

The audio signals 207 are provided to a time-frequency transform block 401. The time-frequency transform block 401 can operate as described in relation to Fig. 4. Other variations to the time-frequency transform block 401 could be used in some examples of the disclosure.

The time-frequency transform block 401 provides an output comprising time-frequency audio signals 403. The time-frequency audio signals 403 can be denoted $S(b,n,i)$ where $b$ is a frequency bin index, $n$ is the time index and $i$ is the channel index. The time-frequency audio signals 403 can be denoted in a column vector form

$$s(b,n) = \begin{bmatrix} S(b,n,1) \\ S(b,n,2) \end{bmatrix}$$

The time-frequency audio signals 403 are provided to a speech prominence estimator 701 and also to an audio divisor block 703.

The speech prominence estimator 701 is configured to receive the time-frequency audio signals 403 and estimate how prominent speech is in the audio signal 207. In the example of Fig. 7 the speech prominence estimator 701 is configured to use a machine learning model 407 to perform the estimation. The machine learning model 407 could be the same as the machine learning model 407 described in relation to the previous embodiments or it could be a different machine learning model 407. In this example it is assumed that the machine learning model 407 is the same.

The machine learning model 407 can be configured to estimate a speech amplitude mask output $O_3(n,k)$ in frequency bands, and then formulate the mask-processed speech signal:

$$s_{speechM}(b,n) = s(b,n)O_3(n,k)$$

where band $k$ is where bin $b$ resides. Then averaged energy values can then be formulated by:

$$E_s(n) = \gamma E_s(n-1) + (1-\gamma) \sum_{b=0}^{N_{bins}} s^H(b,n)s(b,n)$$

$$E_{sm}(n) = \gamma E_{sm}(n-1) + (1-\gamma) \sum_{b=0}^{N_{bins}} s_{speechM}^H(b,n)s_{speechM}(b,n)$$

where $\gamma$ is an average factor, such as 0.999, and $E_s(0) = E_{sm}(0) = 0$.

A Speech prominence value can then be formulated by:

$$\xi(n) = \text{trunc}\left(2\frac{E_{sm}(n)}{E_s(n)} - 0.5\right)$$

where trunc() is an operation limiting the result between 0 and 1.

The speech prominence estimator 701 therefore provides a speech prominence value 705 as an output. The speech prominence value 705 can be denoted as $\xi(n)$. The speech prominence value 705 is a temporally varying value. The speech prominence value 705 indicates the prominence of speech within the audio signal 207. The value of the speech prominence value 705 can be between 0 and 1. In this example 0 means no or very small amounts of speech and 1 means only or very prominently speech.

It is to be noted that the speech prominence value 705 changes over time however this change is typically a slow change. The slow change enables a smooth change of the processing mode which is beneficial because a fast change of a processing mode can cause perceptible instabilities and artefact reproductions.

The time-frequency audio signals 403 and the speech prominence value 705 are provided to an audio divisor block 703. The audio divisor block 703 can operate in a similar way to the speech-remainder divisor block 405 as shown in Fig. 4. However, the audio divisor block 703 differs from the speech-remainder divisor block 405 in that the audio divisor block 703 provides three outputs instead of two.

The three outputs can comprise a first portion that comprises the audio of interest and two second portions that comprise the remainder. The two second portions can comprise different parts of the remainder. In this example one of the second portions can comprise a center portion of the remainder and the other second portion can comprise a side portion of the remainder. Other parts of the audio signals could be identified and/or separated in other examples. In the example of Fig. 7 different types of stereo widening process are used for the different portions.

The three outputs provided by the audio divisor block 703 are the speech time-frequency signal 409, remainder center time-frequency signal 707, and remainder side time-frequency signal 709. The speech time-frequency signal 409 can be denoted as $s_{speech}(b,n)$. The remainder center time-frequency signal 707 can be denoted as $s_{rem,center}(b,n)$ and the remainder side time-frequency signal 709 can be denoted as $s_{rem,side}(b,n)$.

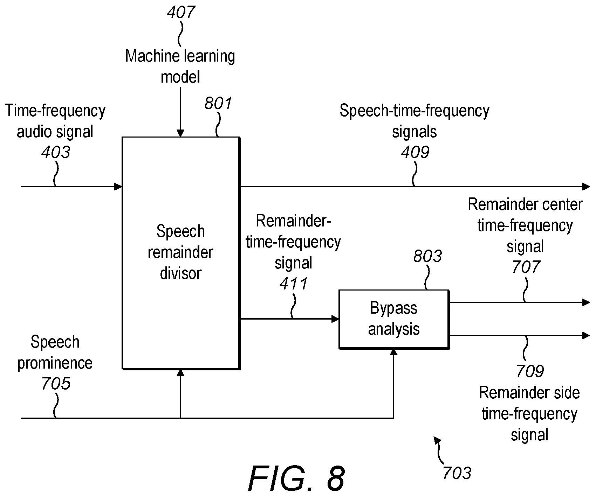

An example of an audio divisor block 703 is shown in more detail in Fig. 8 and described below.

The speech time-frequency signal 409 is provided to an equalize and combine block 717. The speech time-frequency signal 409 is provided to an equalize and combine block 717 without any further processing of the speech time-frequency signal 409. There is no widening or repanning performed on the speech time-frequency signal 409 before it is provided to the equalize and combine block 717.

The remainder center time-frequency signal 707 is provided to a repanning block 711. The repanning block 711 is configured to make central sound sources wider without using stereo widening processes. The repanning block 711 can be configured to reposition the audio using amplitude panning or any other suitable process or combinations of processes. The repositioning of the audio makes the central sound sources appear to be wider.

The repanning block 711 provides a repanned remainder time-frequency signal 713 as an output. The repanned remainder time-frequency signal 713 is provided to the equalize and combine block 717.

The remainder side time-frequency signal 709 is provided to a widening processing block 413. The widening processing block 413 can be configured to process an input signal to perform stereo widening on the input signal. The widening processing block 413 can be as shown in Fig. 4 and described above.

The widening processing block 413 provides the widened remainder time-frequency signal 715 as an output. The widened remainder time-frequency signal 715 is provided to the equalize and combine block 717.

The equalize and combine block 717 therefore receives the speech time-frequency signal 409, the repanned remainder time-frequency signal 713 and the widened remainder time-frequency signal 715. The speech time-frequency signal 409 comprises a first portion of the audio signal that has not been processed with stereo widening or repanning. The widened remainder time-frequency signal 715 comprises a second portion of the audio signal that has been processed with stereo widening but not with repanning. The repanned remainder time-frequency signal 713 comprises a third portion of the audio signal that has been processed with repanning but not with stereo widening.

The equalize and combine block 717 is configured to equalize and combine the respective input signals to generate the processed time-frequency audio signal 419. Any suitable process can be used to equalize and combine the respective input signals. In the example of Fig. 7 the equalize and combine block 717 can be configured to adjust the equalization based on the speech prominence value 705.

As an example of an operation of the equalize and combine block 717 is to determine three different equalizers: $g_{speech}(b)$, $g_{general}(b)$, and $g_{remainder}(b)$.

The equalizers $g_{speech}(b)$ and $g_{remainder}(b)$ can be as described above. That is, the equalizer $g_{speech}(b)$ can performs more equalization, whereas the equalizer $g_{remainder}(b)$ performs only modest or no equalization in order to avoid distortions. The equalizer $g_{general}(b)$ can intermediate to the other equalizers, that is it can perform more equalization that the equalizer $g_{remainder}(b)$ but would perform less equalization than the equalizer $g_{speech}(b)$. Therefore, if there is a time period with no speech so that the speech prominence value 705 $\xi(n) = 0$ then some equalization would be applied, but not too much so as to avoid distortion.

Once the three equalizers have been determined the equalization can be applied based on the speech prominence value 705. For example, the equalization can be applied by:

$$s'_{speech}(b, n) = (\xi(n)\, g_{speech}(b) + (1 - \xi(n))g_{general}(b))\, s_{speech}(b, n)$$

$$s'_{rem,center}(b, n) = (\xi(n)\, g_{remainder}(b) + (1 - \xi(n))g_{general}(b))s_{rem,center}(b, n)$$

$$s'_{rem,side}(b, n) = (\xi(n)\, g_{remainder}(b) + (1 - \xi(n))g_{general}(b))s_{rem,side}(b, n)$$

The resulting signals can be combined using any suitable combination such as:

$$s_{processed}(b, n) = s'_{speech}(b, n) + s'_{repanned}(b, n) + s'_{widened}(b, n)$$

The equalize and combine block 717 provides the processed time-frequency audio signal 419 as an output. The processed time-frequency audio signal 419 can be denoted as $s_{processed}(b,n)$. The processed time-frequency audio signal 419 is provided to the inverse time-frequency transform block 421.

The inverse time-frequency transform block 421. Is configured to perform an inverse time-frequency transform. The inverse time-frequency transform block 421 provides a processed audio signal 205 as an output. The processed audio signal 205 can be provided in any suitable format.

Fig. 8 shows an example method that could be performed by an audio divisor block 703 as shown in Fig. 7. This shows an example that can be used to divide audio signals into a first portion, a second portion and a third portion. The first portion predominantly comprises audio of interest and the second and third portions predominantly comprise audio that is not the audio of interest, such as non speech sounds or ambient sounds. Other methods and means could be used to divide the audio signals into the respective portions in other examples of the disclosure. In the example of the disclosure the audio of interest comprises speech and the second portion comprises remainder. Other types of audio could be comprised in the respective portions in other examples.

The time-frequency signals 403 are provided as an input to the audio divisor block 703. The time-frequency signals 403 can be provided from a time-frequency transform block 401 as shown in Fig. 7 or from any other suitable source. The audio divisor block 703 also receives the speech prominence value 705 as an input.

The audio divisor block 703 comprises a speech-remainder divisor block 801. The speech remainder divisor block 801 can operate similarly to the speech-remainder divisor block 405 shown in Figs. 4 and 5 except that in this example the division of the audio into the respective portions is adjusted by the speech prominence value 705.

To adjust the respective portions the initial speech time-frequency signal $s'_{speech}(b,n)$ and initial remainder time-frequency signal $s'_{remainder}(b,n)$ can be determined. These portions can be determined as presented above or by using any other suitable process. The respective portions are then mixed based on the speech prominence value 705. For example, by:

$$s_{speech}(b,n) = \xi(n)\, s'_{speech}(b,n)$$

$$s_{remainder}(b,n) = \big(1 - \xi(n)\big)s'_{speech}(b,n) + s'_{remainder}(b,n)$$

If the speech prominence value 705 $\xi(n)$ = 1 then the speech-remainder divisor block 801 can operate as described above, so as to provide full speech enhancement or substantially full speech enhancement in the stereo widening processing. If the speech prominence value 705 $\xi(n)$ = 0, then the speech-remainder divisor block 801 forwards all of the audio to the remainder. In this case all of the audio would be classed as the second portion and it would be processed without any speech enhancement in the stereo widening processing. If the speech prominence value 705 0 < $\xi(n)$ < 1, then partial speech enhancement in the stereo widening processing can be performed.

The speech-remainder divisor block 801 provides the speech time-frequency signal 409 and the remainder time-frequency signal 411 as outputs. The remainder time-frequency signal 411 is provided to a bypass analysis block 803.

The bypass analysis block 803 receives the remainder time-frequency signal 411 and the speech prominence value 705 as inputs. The bypass analysis block 803 is configured to determine if audio in a certain time-frequency tile is in the center of the audio scene or located towards the sides.

If the audio is located towards the sides of an audio scene then this audio can be stereo widened to obtain a wider audio scene. If the audio is located towards the centre of an audio scene then this audio can bypass the stereo widening to avoid negative effects of the stereo widening.

The bypass analysis block 803 can determine an initial bypass coefficient $\beta'(k,n)$ using the remainder time-frequency signal 411 $s_{remainder}(b,n)$.

The initial bypass coefficient $\beta'(k,n)$ can be given by:

$$\beta'(k,n) = \gamma(k,n)\,\chi(k,n)$$

Where $\gamma(k,n)$ is a coherence value and $\chi(k,n)$ is a focus coefficient. The coherence values give a measure of the coherence between respective channels. The coherence value $\gamma(k,n)$ could be given by:

$$\gamma(k,n) = \frac{\sum_{b=b_{low}(k)}^{b_{high}(k)} Re(S^*(b,n,1)S(b,n,2))}{\sum_{b=b_{low}(k)}^{b_{high}(k)} (|S(b,n,1)||S(b,n,2)|)}$$

Where *Re* denotes the real part operator and * denotes the complex conjugate and *k* denotes the frequency band and where $b = 1, ..., N_{bins}$ is the frequency bin index.

The focus coefficient $\chi(k,n)$ can be derived from an estimated angle of arrival for the sound. The focus coefficient $\chi(k,n)$ can give a measure of how much of the sound arrives from a particular angle. The focus coefficient $\chi(k,n)$ can be given by:

$$\chi(k,n) = \begin{cases} 1, & |\theta(k,n)| < \theta_{Th1} \\ 1 - \dfrac{|\theta(k,n)| - \theta_{Th1}}{(\theta_{Th2} - \theta_{Th1})}, & \theta_{Th1} \le |\theta(k,n)| \le \theta_{Th2}, \\ 0, & |\theta(k,n)| > \theta_{Th2} \end{cases}$$

Where the angles $\theta_{Th1}$ and $\theta_{Th2}$ define a central angular range in the audio scene and $\theta_{Th1} < \theta_{Th2}$.

The value of the initial bypass coefficient $\beta'(k,n)$ can then be adjusted based on the speech prominence value 705. The adjustment could be:

$$\beta(k,n) = \left(1 - \xi(n)\right)\beta'(k,n)$$

The adjusted bypass coefficient $\beta(k,n)$ is used to determine the remainder center time-frequency signal 707 $s_{rem,center}(b,n)$ and remainder side time-frequency signal 709 $s_{rem,side}(b,n)$. These could be determined by:

$$s_{rem,center}(b,n) = \beta(k,n)^p\, s_{remainder}(b,n)$$

$$s_{rem,side}(b,n) = \left(1 - \beta(k,n)\right)^p s_{remainder}(b,n)$$

where $p$ is a constant (such as $p = 0.5$).

If the speech prominence value 705 $\xi(n) = 1$, then all remainder sound is forwarded to the remainder side time-frequency signal 709. This enables stereo widening to be applied to all of the remainder sound. This provides for a maximum spatial difference between the first portion comprising speech and the second portion that doesn't comprise speech. In this operating mode, the system of Figure 7 operates substantially the same way as the system of Figure 4. If the speech prominence value 705 $\xi(n) = 0$, then the bypass analysis block 803 is configured to forward the remainder sound to the remainder centre time-frequency signals 707 fully in dependence of the bypass coefficient $\beta'(k,n)$. This enables repanning (when $\beta'(k,n)$ is large) or stereo widening (when $\beta'(k,n)$ is small) to be applied to the remainder sound and provides for optimal, or substantially optimal, audio quality for general audio, for example, audio where speech prominence is small. The general audio can be audio that is not in the portion. In this operating mode, the system of Figure 7 operates substantially differently to the system of Figure 4. If the speech prominence value 705 $0 < \xi(n) < 1$, the system of Figure 7 operates in a way that is between the above two operating modes. When $\xi(n)$ is closer to 1 it operates in a way that is closer to the system of Figure 4.

The audio divisor block 703 then provides the speech time-frequency signals 409, the remainder centre time-frequency signals 707 and the remainder side time-frequency signals 709 as outputs.

Variations to the above-described examples can be used in implementations of the disclosure. For instance, the loudspeakers 203 that are used to playback the audio could be located in a headset rather than in the electronic device 201. In such cases the widening that is performed by the widening processing block 413 would comprise widening that is suitable for headphone reproduction. For example, the widening could comprise using head related transfer functions (HRTF) pointing to suitable angles such as $\pm90$ degrees.

In the examples shown above there is no processing of the speech time-frequency signal 409 before it is provided to the equalize and combine blocks 415, 717. In other example some processing could be performed on the speech time-frequency signal 409 before it is provided to the equalize and combine blocks 415, 717. For example repanning or any other suitable process could be performed on the speech time-frequency signal 409 before it is provided to the equalize and combine blocks 415, 717.

In the above-described examples the processing is performed in the time-frequency domain. In other examples some of the processing could be performed in the time domain. For example, the widening processing could be performed in the time domain by using appropriate filters. If some of the processing is performed in the time domain then this may require some of the blocks to be ordered differently to the examples described above. For example, the inverse time frequency transform would be performed before any processing in the time domain.

In some examples a delay compensation can be applied as appropriate. For example, the widening processing could cause some delay. In such cases the other processing paths can be delayed by a corresponding amount in order to maintain synchronisation.

In some examples, while determining the speech prominence value 705 $\xi(n)$, the smoothing over time might be uneven depending on whether speech is starting or ending. For example, the smoothing can be tuned to react quickly to increasing values, but to react slowly to decreasing values. This ensures that speech enhancement will be used if there is speech in the audio signals but allows slowly fading the speech enhancement mode when speech is no longer present so as to avoid the perception of fluctuating processing.

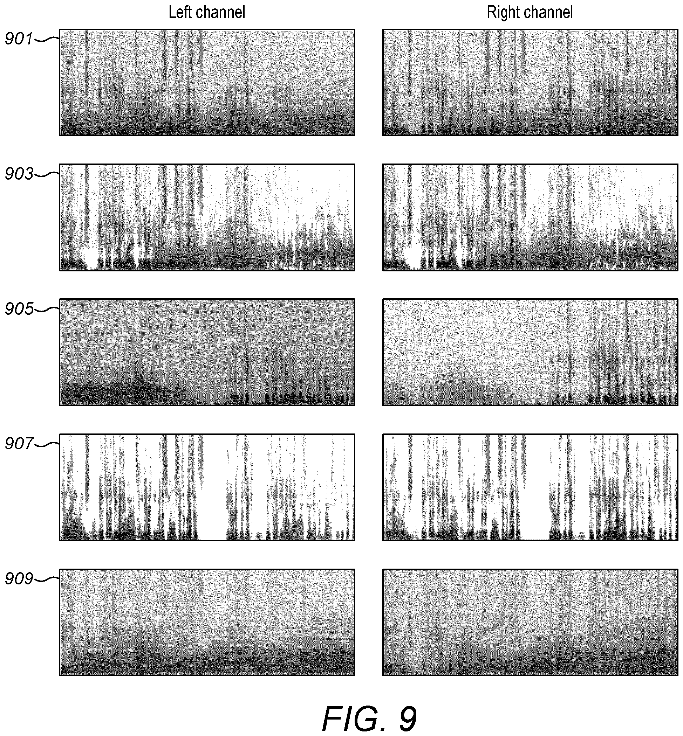

Fig. 9 shows example results obtained using examples of the disclosure. The results comprise spectrograms obtained for different conditions. The left column shows spectrograms for a left audio channel and the right column shows spectrograms for a right audio channel.

The first row 901 shows spectrograms of an unprocessed stereo audio sample. The stereo audio sample comprises incoherent pink noise, panned speech, and piano music. The pink noise remains static and incoherent, but the speech and piano, which are inter-channel coherent, pan as a function of time. The speech sound is at the center at the beginning, but pans right at the end, that is, the speech fades out from the left channel. The music sound is left at the beginning and pans to the center, that is, it fades in at the right channel. These features can be seen at the first row 901 of spectrograms.

The second row 903 shows spectrograms for the center portion that has been processed without stereo widening. These spectrograms have been obtained without using examples of the disclosure. As is seen in these spectrograms, the speech is at this center signal at first, but then vanishes when the speech pans to the side. Also it is seen that the piano music fades in to the center signal when it moves from left to center.

The third row 905 shows spectrograms for the side part of audio that has been widened without using examples of the disclosure. This is the side portion corresponding to the center portion of the audio from the second row 903. That is the speech portions have been widened with the remainder portions. In the beginning the spectrograms predominantly contain the music sound because the music is at the side. Towards the spectrograms contain speech sound because the speech is at the side. That is, in the first part of the spectrogram the music is stereo widened, and at the end part of the spectrogram the speech is stereo widened.

The fourth row 907 shows spectrograms for the speech portion that has been processed according to examples of the disclosure. That is, the speech portion has been separated from the remainder of the audio and has been processed without widening. The spectrogram show that the portion contains predominantly speech regardless of the speech position, or the position of other sounds. These spectrograms also show that at the end, speech fades out from the left channel appropriately.

The fifth row 909 shows spectrograms for the remainder portion that has been processed according to examples of the disclosure. That is, the remainder portion has been separated from the speech and has been processed with widening. The spectrograms show the remaining components of the audio. The spectrograms show that the music sound fades in at the right channel appropriately.

In the examples of Figs. 4 to 9 the spatial processing that is used for the respective portions of the audio signals comprises stereo widening. Other types of spatial processing could be used in other examples. For instance, the spatial processing could comprise binauralization, stereo to multi-channel upmixing, sound bar reproduction, sound bar surround reproduction, cross-talk canceled stereo playback of multi-channel sound or any other suitable types of spatial processing.

As an example the spatial processing can comprise binauralization. In such examples the input audio signals 207 can comprise 5.1 multichannel signals, which are to be binauralized for headphone spatial audio listening.

In such examples the input 5.1 multichannel signals can be processed to identify a first portion and a second portion. The first portion can comprise predominantly audio of interest such as speech and the second portion can predominantly comprise a remainder. The second portion can then be processed using a spatial process such as head-related transfer functions (HRTFs) processing or other suitable process. The processing using the HRTFs can comprise applying a HRTF filter pair to respective channels of the multichannel signals. The directions of the HRTFs can be selected to match the directions of the multichannel signals. For instance, the directions can be 30, -30, 0, 110, and -110 degrees. The .1 (that is the low-frequency effects, (LFE)) channel can be reproduced from the center direction, or with a specific LFE HRTF response.

The first portion that predominantly comprises the speech or other audio of interest can be processed using a different spatial processing. In this case the first portion can be processed without using the HRTF processing. In some examples the first portion can be processed using a downmix matrix. The downmix matrix for the five non-LFE channels could be:

$$\mathbf{M}_{dmx} = \begin{bmatrix} 1.0 & 0.0 & \sqrt{0.5} & 1.0 & 0.0 \\ 0.0 & 1.0 & \sqrt{0.5} & 0.0 & 1.0 \end{bmatrix}$$

where the rows contain are the downmix weights for the left and right channels.

Different equalization may be applied for the first portion and the second portion. The different equalization can spectrally emphasize the speech or other audio of interest, similarly as was presented previously for the stereo widening embodiment.

This example provides for optimized, or substantially optimized, intelligibility of the audio of interest because the audio of interest in the first portion can be processed without HRTF processing. The remainder in the second portion can be processed with the HRTFs and so they can be perceived as spatialized.

In some examples that use binauralization, the spatial processing can comprise applying a room effect. For example, the input audio signals 207 can comprise 5.1 multichannel signals from which a first portion and a second portion can be identified. The second portion that comprises the remainder can be reproduced with binaural room impulse responses (BRIRs). In this case, the remainder in the second portion would comprise late reverberation, modeled or measured early reflections of a room and/or other reflections. This enables the second portion to be perceived as being well externalized and spacious. The first portion, that comprises the speech or other audio of interest would not be processed using the BRIRs. This enables the first portion to retain better clarity and intelligibility since the room effect does not affect first portion.

In another example, upmixing a stereo sound to a multichannel format such as 5.1 can be performed. In some example the processing can be performed so that the audio of interest is only put to the center channel (and possibly to LFE in some cases) or to a subset of the front three loudspeakers. The remainder in the second portion can be upmixed to all channels (or to a subset of the channels). For example, in the case of 5.1, the second portion could be upmixed to the left, right, surround left, and surround right channels.

In such examples there would be expected to be some reverberation and/or decorrelated signal generated in the upmixing. This would usually be to the side and/or rear channels. By not using the upmixing on the first portion the intelligibility of the audio of interest is improved because the reverberation and/or decorrelation would deteriorate quality of the audio of interest.

In some examples, a surround sound such as a 5.1 sound can be reproduced over a pair of loudspeakers or a sound bar. If a sound bar is used, a suitable method is to use beamforming to reproduce the surround channels, and if a pair of loudspeakers is used, a suitable method is to use a cross-talk canceling system similar to the stereo widening case to reproduce the surround channels. Therefore, in these examples the first and second portions can be identified. The second portion can be processed with the beamforming or cross-talk cancelling techniques and the first portion can be processed without the beamforming or cross-talk cancelling techniques. The first portion can be processed using panning techniques or from individual loudspeakers. This can lose spatialization of the audio of interest in the first portion but improves the clarity and presence of the audio of interest.

Therefore, examples of the disclosure show that the present invention provides for improved spatial processing of audio scenes. By separating the speech, or other dominant audio, from the remainder it enables the speech to be processed with substantial equalization without causing distortion at the loudspeakers. Also, by using spatial processing in the remainder but not the speech, or other dominant sounds, this can enable more extensive spatial processes to be used without compromising the sound quality of the speech sounds.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1.   An apparatus comprising means for:

   obtaining at least one audio signal comprising two or more channels;
   processing the at least one audio signal with program code to identify at least a first portion of the at least one audio signal wherein the first portion predominantly comprises audio of interest;
   processing the first portion using a first process;
   processing a second portion using a second process comprising spatial audio processing wherein the first process comprises no spatial audio processing or a low level of spatial audio processing compared to the second process and the second portion predominantly comprises a remainder; and
   enabling the processed first portion and second portion to played back using two or more loudspeakers.

2.   An apparatus as claimed in claim 1, wherein the second process comprises a second stereo widening process.

3.   An apparatus as claimed in any preceding claim, wherein the first process enables the first portion to be provided in a central position in a rendered sound scene.

4.   An apparatus as claimed in any of claim 1 or 2, wherein the second process retains spatial audio effects within a rendered sound scene.

5.   An apparatus as claimed in any preceding claim, wherein the means are for applying a first equalization process to the first portion and applying a second equalization process to the second portion.

6.   An apparatus as claimed in claim 5, wherein the first equalization process comprises larger gains than the second equalization process.

7.   An apparatus as claimed in any preceding claim, wherein the program code used to identify the first portion of the at least one audio signal comprises a trained machine learning model.

8.   An apparatus as claimed in claim 7, wherein the trained machine learning model is configured to at least one of:

separate, at least partially, the first portion of the at least one audio signal comprising audio of interest from the remainder of the at least one audio signal; and

provide one or more sets of processing coefficients that enables the first portion and the second portion to be obtained.

9. An apparatus as claimed in any preceding claim, wherein the second process comprises a cross-talk cancellation based stereo widening processing.

10. An apparatus as claimed in any preceding claim, wherein the program code is configured to identify at least a first portion and two or more second portions.

11. An apparatus as claimed in claim 10, wherein the two or more second portions are processed using different spatial audio processes.

12. An apparatus as claimed in any preceding claim, wherein the spatial audio processes comprise any one or more of: stereo widening; binauralization; upmixing stereo signals; sound bar surround reproduction; and cross-talk canceled stereo playback of multi-channel sound.

13. An apparatus as claimed in any preceding claim, wherein the audio of interest comprises at least one of: speech; and human vocal sounds.

14. An apparatus as claimed in any preceding claim, wherein the remainder comprises at least one of:

audio that is not the audio of interest; and
ambient sounds.

15. A method comprising:

obtaining at least one audio signal comprising two or more channels;
processing the at least one audio signal with program code to identify at least a first portion of the at least one audio signal wherein the first portion predominantly comprises audio of interest;
processing the first portion using a first process;
processing a second portion using a second process comprising spatial audio processing wherein the first process comprises no spatial audio processing or a low level of spatial audio processing compared to the second process and the second portion predominantly comprises a remainder; and
enabling the processed first portion and second portion to played back using two or more loudspeakers.

FIG. 1

FIG. 2

FIG. 3

FIG. 4

FIG. 5

EP 4 340 396 A1

*FIG. 6*

FIG. 7

EP 4 340 396 A1

FIG. 8

Left channel       Right channel

FIG. 9

Europäisches
Patentamt

European
Patent Office

Office européen
des brevets

# EUROPEAN SEARCH REPORT

**Application Number**

EP 23 19 2966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2023/118644 A1 (NOKIA TECHNOLOGIES OY [FI]) 29 June 2023 (2023-06-29) * page 26, line 30 – page 29, line 28 * * page 36, line 1 – page 40, line 26; figures 7-8 * | 1,3,4,7, 8,12-15 | INV. H04S7/00 |
| X Y A | WO 2021/058858 A1 (NOKIA TECHNOLOGIES OY [FI]) 1 April 2021 (2021-04-01) * pages 3,17; figure 1 * * page 27 – page 29 * | 1,2,4, 9-15 5-8 3 | |
| X | EP 3 745 744 A2 (NOKIA TECHNOLOGIES OY [FI]) 2 December 2020 (2020-12-02) * paragraph [0046] – paragraph [0052]; figures 1A,1B * * paragraph [0174]; figure 5 * * paragraph [0104] – paragraph [0106] * | 1-4,9-15 | |
| Y | WO 2010/073193 A1 (KONINKL PHILIPS ELECTRONICS NV [NL]; JANSE CORNELIS P [NL] ET AL.) 1 July 2010 (2010-07-01) * page 9, line 14 – page 9, line 23 * | 5,6 | TECHNICAL FIELDS SEARCHED (IPC) H04S |
| Y | US 2018/033449 A1 (THEVERAPPERUMA LALIN S [US] ET AL) 1 February 2018 (2018-02-01) * abstract; paragraph [0035] * | 7,8 | |

The present search report has been drawn up for all claims

| Place of search | Date of completion of the search | Examiner |
|---|---|---|
| The Hague | 12 January 2024 | Will, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 2966

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2024

| Patent document cited in search report | Publication date | Patent family member(s) | Publication date |
|---|---|---|---|
| WO 2023118644 A1 | 29-06-2023 | GB 2614253 A | 05-07-2023 |
| | | WO 2023118644 A1 | 29-06-2023 |
| WO 2021058858 A1 | 01-04-2021 | CN 114503606 A | 13-05-2022 |
| | | EP 4035425 A1 | 03-08-2022 |
| | | GB 2587357 A | 31-03-2021 |
| | | US 2022295212 A1 | 15-09-2022 |
| | | WO 2021058858 A1 | 01-04-2021 |
| EP 3745744 A2 | 02-12-2020 | CN 112019993 A | 01-12-2020 |
| | | CN 115190414 A | 14-10-2022 |
| | | EP 3745744 A2 | 02-12-2020 |
| | | GB 2584630 A | 16-12-2020 |
| WO 2010073193 A1 | 01-07-2010 | CN 102265643 A | 30-11-2011 |
| | | EP 2382799 A1 | 02-11-2011 |
| | | JP 5538425 B2 | 02-07-2014 |
| | | JP 5859600 B2 | 10-02-2016 |
| | | JP 2012513701 A | 14-06-2012 |
| | | JP 2014180008 A | 25-09-2014 |
| | | KR 20110099750 A | 08-09-2011 |
| | | US 2011264450 A1 | 27-10-2011 |
| | | WO 2010073193 A1 | 01-07-2010 |
| US 2018033449 A1 | 01-02-2018 | NONE | |

EPO FORM P0459

For more details about this annex : see Official Journal of the European Patent Office, No. 12/82